# EUROPÄISCHE PATENTSCHRIFT

(11) **EP 0 539 401 B1**
(45) Veröffentlichungstag und Bekanntmachung des Hinweises auf die Patenterteilung: **26.04.1995**
(21) Anmeldenummer: 91911915.6
(22) Anmeldetag: 02.07.1991
(51) Int. Cl.: H02P 7/62, H02P 6/00

(54) **VERFAHREN UND SCHALTUNGSANORDNUNG ZUR SENSORLOSEN DREHWINKELERFASSUNG EINER DÄMPFERLOSEN, VORZUGSWEISE PERMANENTMAGNETERREGTEN, ÜBER EINEN STROMRICHTER GESPEISTEN SYNCHRONMASCHINE**
PROCESS AND CIRCUIT FOR THE SENSOR-LESS DETECTION OF THE ANGLE OF ROTATION IN A SYNCHRONOUS MACHINE WITHOUT A DAMPER AND PREFERABLY EXCITED BY A PERMANENT MAGNET AND POWERED VIA A CONVERTER
PROCEDE ET CIRCUIT DE DETECTION, SANS CAPTEURS, DE LA POSITION ANGULAIRE D'UNE MACHINE SYNCHRONE SANS AMORTISSEUR, DE PREFERENCE EXCITEE PAR UN AIMANT PERMANENT, ALIMENTEE PAR CONVERTISSEUR

(30) Priorität: 13.07.1990 AT 1493/90; 19.04.1991 AT 822/91
(43) Veröffentlichungstag der Anmeldung: 05.05.1993
(73) Patentinhaber: ELIN ENERGIEANWENDUNG GESELLSCHAFT M.B.H., A-1141 Wien (AT)
(72) Erfinder: SCHRÖDL, Manfred, A-7223 Sieggraben (AT); STEFAN, Thomas, A-2102 Bisamberg (AT)
(74) Vertreter: Krause, Peter
(86) Internationale Anmeldenummer: AT9100081
(87) Internationale Veröffentlichungsnummer: WO9201331

(56) Entgegenhaltungen:
- EP-A- 183 277
- US-A- 4 772 839
- PATENT ABSTRACTS OF JAPAN, Bd. 6, Nr. 170 (E-128)(1048) 3. September 1982; & JP-A-57 085 590
- PATENT ABSTRACTS OF JAPAN, Bd. 12, Nr. 80 (E-590)(2927) 12. März 1988; & JP-A-62 217 892
- IEEE TRANSACTIONS ON INDUSTRIAL ELECTRONICS AND CONTROL, Bd. IE-34, Nr. 2, Mai 1987, New York, US, Seiten 234 - 239; J.T. BASS ET AL.: 'Simplified Electronics for Torque Control of sensorless switched-reluctance Motor'

## Beschreibung

Die Erfindung betrifft ein Verfahren und eine Schaltungsanordnung zur sensorlosen Drehwinkelerfassung einer dämpferlosen, vorzugsweise permanentmagneterregten, über einen Stromrichter gespeisten Synchronmaschine durch Meßsignale.

Permanentmagneterregte Synchronmaschinen gewinnen durch die Fortschritte auf dem Sektor der Magnetmaterialien, der Leistungs- und Informationselektronik zunehmend an Bedeutung in der Antriebstechnik. Sie zeichnen sich gegenüber Asynchronmaschinen durch eine einfachere regelungstechnische Struktur und höheren Wirkungsgrad aufgrund der sehr geringen Rotorverluste aus.

Für die Durchführung der Regelalgorithmen bei dynamisch hochwertigen feld- bzw. polradorientierten Regelkonzepten ergibt sich die Notwendigkeit eines mechanischen Gebers zur Erfassung der Polradposition. Es ist daher das Ziel vieler Forschungsaktivitäten, den mechanischen Geber durch mathematische Modelle oder durch Ausnützung physikalischer Effekte zu ersetzen.

Es sind verschiedene Verfahren zur Lageerfassung des Polrades einer permanentmagneterregten Synchronmaschine bekannt.

Ein derartiges Verfahren wird im Kapitel "Algorithmus zur rechnerischen Erfassung der Polradlage einer permanentmagneterregten Synchronmaschine ohne Lagegeber" von M. Schrödl und T. Stefan im Tagungsbuch (Seite 48 bis 54) der ETG/VDE-Konferenz "Antriebssysteme für die Geräte- und Kraftfahrzeugtechnik", veranstaltet 1988 in Bad Nauheim, BRD, beschrieben. Dabei erfolgt die Erfassung der Polradlage bei Vollpolmaschinen durch Auswertung der induzierten Spannung. Ab einer gewissen mechanischen Drehzahl kann ein dauermagneterregter Rotor selbst als Lagegeber verwendet werden, da ein in einer Statorwicklung induzierter Spannungsraumzeiger im allgemeinen in eindeutiger Weise mit der gesuchten Rotorposition in Zusammenhang steht. Dabei können auch nichtsinusförmige Induktionsverteilungen im Luftspalt zugelassen werden. Dieser induzierte Spannungsraumzeiger kann aus den Klemmenspannungen unter Berücksichtigung der ohmschen und induktiven Spannungsabfälle berechnet werden.

Nachteilig dabei ist, daß diese Auswertung erst ab einer gewissen Mindestdrehzahl erfolgen kann, da der induzierte Spannungsraumzeigerbetrag proportional mit der Drehzahl abnimmt.

Über ein anderes Verfahren berichtet das Kapitel "Detection of the rotor position of a permanent magnet synchronous machine at standstill" von M. Schrödl, enthalten in den Proceedings, die zur "International Conference on Electrical Machines" 1986 in Pisa, Italien, publiziert wurden.

Bei diesem Verfahren wird mittels elektrischer Meßsignale die von den permanenten Magneten hervorgerufene, variierende magnetische Sättigung gemessen. Da sich diese Art der Messung reproduzieren läßt, ist die Rotorposition exakt feststellbar. Die für die Durchführung der Messung notwendige Kenntnis der Polarität der Magnete läßt sich durch Veränderung des magnetischen Arbeitspunktes und die Messung seiner Auswirkung auf die Impedanz feststellen.

Es ist hier die Eruierung der Rotorpostion auch bei stillstehender Maschine möglich.

Der Nachteil dieser Methode besteht darin, daß durch die Notwendigkeit einer zusätzlichen analogen Stromquelle das Meßverfahren sehr aufwendig ist.

Auch die Dissertation "Die permanenterregte umrichtergespeiste Synchronmaschine ohne Polradgeber als drehzahlgeregelter Antrieb" von H. Vogelmann (Universität Karlsruhe, BRD, 1986) befasst sich mit einem Verfahren zur Ortung der Polradlage.

Dabei wird ein mittels eines Umrichters erzeugter, relativ hochfrequenter Strom als Prüfsignal dem eigentlichen Nutzsignal überlagert. Der Grundgedanke dabei ist, daß ein in eine gewisse (Raumzeiger-) Richtung aufgeschaltetes elektrisches Wechselsignal aufgrund der unterschiedlichen Induktivitäten in Längs- und Querachse im allgemeinen auch in der orthogonalen Richtung eine Reaktion hervorruft. Nur für den Fall, daß das Wechselsignal genau in der Rotor-Längs- bzw. -Querrichtung aufgebracht wird, tritt eine derartige Verkopplung nicht auf. Damit ergibt sich ein Kriterium, ob das Signal in die gesuchte ausgezeichnete Richtung appliziert wird oder nicht. Eine Voraussetzung zur Erreichnung exakter Meßergebnisse ist eine Permanentmagneterregte Synchronmaschine mit Schenkelpolcharakter, also mit ungleichen Induktivitäten in Längs- und Querrichtung, wie etwa bei flußkonzentrierenden Anordnungen.

Der überwiegende Teil der permanentmagneterregten Synchronmaschinen wird jedoch nicht in flußkonzentrierender Bauweise ausgeführt, sondern mit konstantem Luftspalt und auf die Rotoroberfläche aufgeklebten Magneten. Dies ist fertigungstechnisch einfacher und erlaubt bei Verwendung von hochwertigen Samarium-Kobalt- bzw. Neodym-Eisen-Magneten Luftspaltinduktionen von etwa 1 Tesla.

Bei den erwähnten Ortungsverfahren besteht also der Nachteil, daß sich damit nur bei Maschinen mit ausgeprägter Schenkelpolcharakteristik brauchbare Ergebnisse ergeben.

Aufgabe der Erfindung ist es daher, ein Verfahren zur geberlosen Lageerfassung des Rotors einer permanentmagneterregten Synchronmaschine durch Messung ausschließlich elektrischer Größen zu realisieren und die Nachteile bzw. Ungenauigkeiten der bekannten Verfahren zu vermeiden.

Die Aufgabe wird durch die Erfindung gelöst. Diese ist dadurch gekennzeichnet, daß die Meßsignale vom Stromrichter generierte Spannungssprünge sind, die einem Rechner zugeführt werden, der aus der Winkelabhängigkeit des Quotienten aus Statorspannungsraumzeiger und zeitlicher Änderung des Stromraumzeigers, im folgenden als komplexe differentielle Induktivität bezeichnet, die Polradlage berechnet, wobei die komplexe differentielle Induktivität sowohl in ihrem Betrag als auch in ihrem Argument mit dem doppelten Wert des gesuchten Drehwinkels, und zwar näherungsweise sinusförmig, schwankt, und daß dieser Verfahrensschritt mit geänderter Spannungsraumzeigerrichtung, in der vorzugsweise strangzahlgleichen Anzahl, wiederholt wird und für jede Meßrichtung die örtliche komplexe differentielle Induktivität ermittelt wird und daraus unter der idealisierten Annahme einer sinusförmigen Schwankung von Betrag und Phase der komplexen differentiellen Induktivität, wobei deren Betrag seine Extremwerte in der Magnetisierungsachse und elektrisch 90 Grad darauf und deren Argument an diesen Stellen ihre Nulldurchgänge und bei Winkeln von elektrisch 45 ° + k. 90 ° ihre Extrema aufweist, unter Verwendung der bekannten Methoden der komplexen Rechnung der doppelte Wert des gesuchten Drehwinkels, welcher mit der Magnetachse übereinstimmt, ermittelt wird, und in die so festgestellte Magnetachse ein einziges Mal zum Start der Maschine einen Stromraumzeiger zum Zweck der Änderung der Magnetisierung einprägt und sofort - wie oben geschildert - die komplexe differentielle Induktivität bestimmt und ihren Betrag berechnet, sodann einen Stromraumzeiger in die Gegenrichtung zum zuvor eingeprägten Stromraumzeiger einprägt und wiederum den Betrag berechnet, und dann aus der Tatsache, daß die Magnetisierungsrichtung mit dem Minimum der zwei zuvor berechneten Beträge übereinstimmt, die mit dem gesuchten Drehwinkel übereinstimmende Magnetisierungsrichtung festliegt.

Der Vorteil des erfindungsgemäßen Verfahrens besteht sowohl in seiner großen Genauigkeit als auch darin, daß für die Polradortung keine analogen Zusatzstromquellen benötigt werden, sondern der - ohnehin vorhandene - speisende Stromrichter als Meßsignalgenerator eingesetzt wird.

Weiters ist vorteilhaft, daß mit der Erfindung die exakte Polradortung bei beliebiger Last durchführbar ist.

In einer Weiterbildung der Erfindung werden zwei hintereinanderfolgende Messungen durchgeführt, wobei der Spannungsraumzeiger der zweiten Messung entweder entgegengesetzt dem Spannungsraumzeiger der ersten Messung oder der Nullspannungsraumzeiger ist, und daß die Differenz der in diesen Messungen verwendeten Spannungsraumzeiger einerseits und die Differenz der aus diesen Messungen ermittelten zeitlichen Änderungen der Stromraumzeiger anderseits gebildet werden und diese Raumzeigergrößen an die Stelle der entsprechenden Raumzeigergrößen bei Einzelmessungen treten.

Auf diese Weise wird der Effekt der vom Magneten herrührenden rotatorisch induzierten Spannung kompensiert. Dadurch funktioniert das Verfahren bei allen Drehzahlen, wobei auch im tiefsten Drehzahlbereich und im Stillstand dieselbe hohe Genauigkeit gegeben ist.

Ein weiteres Merkmal der Erfindung besteht darin, daß die EMK bei drehender Synchronmaschine aus momentanen Schätzwerten von Drehwinkel und Drehzahl berechnet und deren Einfluß auf das Meßergebnis kompensiert wird.

Dadurch ist es möglich, mit nur einer Messung und in Kombination mit tabellarischen Korrekturwerten, eine hohe Genauigkeit zu erzielen.

Entsprechend einer Weiterbildung der Erfindung werden die bei der Bildung der komplexen Kennwerte auftretenden spannungs-, strom-, drehzahl- und flußbetragsabhängigen Abweichungen von den theoretisch erwarteten Werten in Real- bzw. Imaginärteil durch Korrekturwerte berücksichtigt bzw. eliminiert, wobei die Korrekturwerte tabellarisch abgespeichert oder durch einfache Korrekturfunktionen ermittelt werden, oder, bei Überschreitung einer gewissen minimalen Winkelgeschwindigkeit, durch Mittelwertbildung aus den Real- bzw. Imaginärteilen über Verzögerungsglieder bestimmt werden.

Mit dieser Weiterbildung der Erfindung ist der gravierende Vorteil gegeben, daß die Genauigkeit der Flußerfassung wesentlich verbessert wird.

Ein weiteres Merkmal der Erfindung sieht vor, daß die Rotorgeschwindigkeit durch zwei korrespondierende, mit komplementärer Umrichterschalterstellung durchgeführte Teilmessungen addiert wird, wodurch die Rotorgeschwindigwird, indem der Stromänderungssummen-Raumzeiger das Produkt aus Statorflußverkettungs-Raumzeiger und Drehfeldgeschwindigkeit festlegt, und damit die Rotorgeschwindigkeit aus dem Betrag, und die Rotorposition aus dem Winkel dieses komplexen Zeigers folgt.

Diese Ausgestaltung erweist sich als wertvoll, weil damit ein EMK-basierendes Verfahren ohne Spannungssensoren realisierbar ist.

Eine weitere Ausgestaltung der Erfindung ist dadurch gekennzeichnet, daß die gewonnene Flußinformation mit einem Spannungsmodell für Synchronmaschinen, welches den Fluß aus der Ständergleichung berechnet, kombiniert wird und in Drehzahlbereichen, in denen das Spannungsmodell durch störende Driften und Parameterunsicherheiten unbrauchbar wird, fallweise Messungen nach obigen Ansprüchen eingebaut werden, welche dann korrigierend in die vom Spannungsmodell ermittelten Rotorpositionsschätzwerte eingreifen.

Es hat sich als vorteilhaft herausgestellt, die Zeit zwischen zwei Meßzyklen zu erhöhen, weil dadurch die Schallabstrahlung und die elektrischen Verluste verringert werden.

Weitere vorteilhafte Ausgestaltungen sowie Schaltungsanordnungen, mit denen die für den jeweiligen Betriebsfall günstigste Variante des erfindungsgemäßen Verfahrens verwirklicht werden kann, ergeben sich aus den weiteren Ansprüchen 7 bis 10. So kann das erfindungsgemäße Polradortungsverfahren bei den gängigen Regelkonzepten (Toleranzbandführung, Pulsmustervorgabe usw.) problemlos implementiert werden.

An Hand von Ausführungsbeispielen soll nun die Erfindung, unter Verwendung dreistrangiger Synchronmaschinen, näher erläutert werden. (Dasselbe erfindungsgemäße Prinzip ist für Synchronmaschinen mit anderen Strangzahlen in gleicher Weise anwendbar. ) Dabei zeigt Fig. 1 ein Meßverfahren mit fixen Meßzeiten. In Fig. 2 ist die Integration des erfindungsgemäßen Verfahrens in eine Spannungssteuerung mit fixem Pulsmuster dargestellt. Die Anwendung der Erfindung mit definierten Stromänderungen bei einem Antrieb mit Toleranzband-Stromregler ist in Fig. 3 aufgezeigt. Fig. 4 zeigt eine Schaltungsvariante mit einer über drei Strommeßmodule von einem Spannungszwischenkreis-Umrichter gespeisten Synchronmaschine. In allen vier Figuren ist die Schaltung jeweils nur für einen Strang der Statorwicklung gezeichnet; sie ist für die beiden anderen Stränge selbstverständlich analog.

Das erfindungsgemäße Verfahren basiert auf der Tatsache, daß bei Luftspaltinduktionswerten von etwa 1 Tesla gewisse Eisenpartien in der Maschine gesättigt werden. Bei Permanentmagneterregung werden in erster Linie die Statorzähne beträchtlich gesättigt. Weiters ist, bei entsprechender Auslegung, eine gewisse Sättigung im Joch denkbar.

Ein (kleines) Statorstromsignal ruft im Stator ein zusätzliches Magnetfeld hervor, das je nach Stromzeigerrichtung auf Pfaden mit unterschiedlichen magnetischen Leitwerten verläuft. Bei einem Stromraumzeiger parallel zum Raumzeiger des vom Dauermagneten hervorgerufenen magnetischen Flusses verläuft das Zusatzmagnetfeld in den magnetisch stark belasteten Gebieten, bei Aufbringung des Stromraumzeigers normal dazu werden die gesättigten Gebiete weitgehend nicht berührt.

Die magnetische Verteilung in der Maschine definiert also für jede Raumzeigerrichtung eines Meß-Statorstromes einen Arbeitspunkt auf der magnetischen Kennlinie, die den Zusammenhang zwischen den Raumzeigerbeträgen von Durchflutung und magnetischem Fluß angibt. Je nach betrachteter Raumzeigerrichtung schwankt dieser Arbeitspunkt zwischen einem Minimalwert im linearen Teil und einem Maximalwert in der Krümmung der Kennlinie. Diese Modulation des Arbeitspunktes kann durch Messung der differentiellen Induktivität der betrachteten Raumzeigerrichtung erfaßt werden. Dabei ist die Stromänderung im Vergleich zum Nennstrom vernachlässigbar klein, so daß die magnetischen Verhältnisse fast nicht beeinflußt werden. Der Einfluß des Statorwiderstandes ist dabei so klein, daß er vernachlässigt werden kann.

Um die sich bei Messung mittels einer analogen Meßspannungsquelle und sinusförmigen Meßsignalen ergebenden Nachteile (Messung nur bei stillstehendem, unbelastetem Rotor möglich; großer Meß- und Rechenaufwand; Meßsignalgenerator als Zusatzeinrichtung ist während der Messung anstatt des Umrichters auf die Synchronmaschine geschaltet), zu vermeiden, ist beim erfindungsgemäßen Verfahren der Umrichter selbst als Meßsignalgenerator eingesetzt.

### Stillstehende Maschine:

Als Meßsignal werden geschaltete Spannungen aus den Umrichterzweigen auf die Synchronmaschine geschaltet. Es wird dann die differentielle Induktivität aufgrund des Anstiegs des Stromraumzeigerbetrages ermittelt. Damit ist für die möglichen Spannungsraumzeigerrichtungen (0, 120, 240 Grad bei Dreiphasensystemen) eine Messung mit äquivalentem Aussagewert wie mittels einer analogen Zusatzsignalquelle erzielbar. Durch wiederholte Messungen während des Betriebes kann eine statistische Auswertung der anfallenden Information durchgeführt und somit eine große Messgenauigkeit erzielt werden.

### Rotierende Maschine:

Durch Kombination von zwei Messungen wird der Effekt der rotatorisch induzierten Spannung weitestgehend eliminiert. Es werden zwei Messungen durchgeführt, wobei nach der ersten Messung in einem Zweig (beispielsweise Zweig A oder alternativ in allen anderen Zweigen außer A; beides bewirkt eine Messung in die gleiche Raumzeigerrichtung) eine Schalthandlung durchgeführt wird. Sodann wird der Wert der Messung 2 vom Wert der Messung 1 subtrahiert. Der Spannungsdifferenzraumzeiger weist in die Richtung des mit dem geschalteten Wechselrichterzweig verbundenen Stranges, so daß es genügt, die Stromänderung während der Intervalle I und II nur im betreffenden Strang zu messen. (Durch die verschiedenen Induktivitäten aufgrund der Vorsättigung weichen Spannungs- und Meßstromraumzeiger leicht voneinander ab. Bei üblichen Sättigungsverhältnissen beträgt diese Abweichung maximal 7 Grad. Diese Abweichung ist jedoch ein reproduzierbarer Effekt und dadurch ein korrigierbarer Fehler. ) Durch diese Meßstrategie wird die Auswirkung der rotatorisch induzierten Spannung kompensiert.

Bei höheren Drehzahlen ist die Drehung während der Meßzeit nicht vernachlässigbar. In diesem Fall kann der Meßvorgang des Intervalls II in zwei Teilmessungen aufgespaltet werden, wobei der erste Teil vor und der zweite Teil nach Interval I durchgeführt wird. (In beiden Teilmessungen wird der gleiche Spannungsraumzeiger angelegt. ) Dadurch tritt jeweils praktisch derselbe (mittlere) Wert der induzierten Spannung auf.

Auch die induzierte Spannung ist bei höheren Drehzahlen nicht vernachlässigbar. Durch diese Spannung erfolgt die Stromänderung nicht mehr parallel zum angelegten Statorspannungsraumzeiger, sondern in die Richtung der Differenz zwischen Statorspannungs- und induziertem Spannungsraumzeiger. Die Messung erfolgt also scheinbar in den Intervallen I und II in mehr oder weniger abweichende Raumzeigerrichtungen. Es ist (unter Verwendung der Raumzeigerrechnung), mathematisch eindeutig nachweisbar, daß die Messung durch die Differenzbildung der zwei Intervalle wirklich den Induktivitätswert der gewünschten Richtung liefert.

Zum Start des Systems ist es unbedingt notwendig, die Polarität des Permanentmagneten zu bestimmen, da sonst die bestimmte Rotorposition mit einer Unsicherheit von 180 Grad (elektrisch) behaftet ist. Dies ist darin begründet, daß die Induktivitätsschwankungen sich zweimal pro elektrischer Umdrehung wiederholen.

Im vorliegenden Fall erfolgt die Polaritätsbestimmung durch alleinige Verwendung des Umrichters. Nach der Bestimmung der Richtung minimaler und maximaler Induktivität, welche unmittelbar mit der Polradlage bzw. der Magnetisierungsrichtung des Rotors zusammenhängt, wird in etwa diese Richtung ein relativ großer Statorstromraumzeiger aufgebracht, wodurch eine gewisse Verschiebung des magnetischen Arbeitspunktes erfolgt. In diesem neuen magnetischen Arbeitspunkt wird nun eine Induktivitätsmessung, wie zuvor beschrieben, durchgeführt. Ob dieses Zusatzsignal eine Erhöhung oder eine Verminderung der Sättigung gebracht hat, kann entschieden werden, wenn genau die entgegengesetzte Zusatzdurchflutung aufgebracht und wieder die differentielle Induktivität bestimmt wird.

Legt man einen konstanten Spannungsraumzeiger an die Maschine, so ändert sich der Betrag des mit dem Stator verketteten Flusses linear mit der Zeit, während der Strom progressiv zunimmt, wenn der Bereich magnetischer Sättigung erreicht wird. Die Messung der Induktivität erfolgt beispielsweise mit einem konstanten Stromänderungsintervall. Die Zeiten zwischen den Schalthandlungen sind dann ein Maß für die differentielle Induktivität.

Die geringe Statorinduktivität hat zur Folge, daß selbst Ströme in der Größenordnung des Nennwertes keine gravierende Änderung der Sättigungsverhältnisse in der Maschine nach sich ziehen. Es werden zwar die "Induktivitäts-El-lipsen" etwas abgeplattet, jedoch bleibt der Verlauf der winkelabhängigen Induktivität erhalten und der Effekt meßbar. Es besteht die Möglichkeit, die lastabhängigen Sättigungsverhältnisse in einem Festwertspeicher abzulegen und die entsprechenden Kennwerte je nach Lastrom abzufragen. Die Lastpunkte können dahingehend eingeschränkt werden, daß nur flußnormale, also drehmomentbildende Statorstromkomponenten auftreten.

Zur praktischen Bestimmung der Rotorposition sind verschiedene Möglichkeiten des Meßablaufs denkbar. Die zwei wichtigsten Methoden sind, ein festes Meßintervall oder einen festen Stromänderungsbetrag vorzugeben.

Bei Vorgabe eines festen Meßintervalls wird die Zeit des Intervalls I gleich der des Intervalls II und konstant gesetzt. Nimmt man an, daß die Induktivität in Richtung des Stranges A gemessen werden soll, so ist der Zustand der Wechselrichterzweige A, B, C im Intervall I beispielsweise 1, 0, 0 (1 bedeutet: Wechselrichterzweig an positivem Zwischenkreispotential) und im Intervall II beispielsweise 0, 0, 0 oder 1, 1, 1 oder 0, 1, 1. In jedem Fall zeigt der Differenzspannungsraumzeiger in Richtung zur Strangachse A. Legt man gedanklich die reelle Achse des Raumzeiger-Koordinatensystems in die zu messende Strangachse, so ergibt sich, daß der Kehrwert der gesuchten Induktivität proportional der Differenz der betreffenden Strangstromänderungen im Intervall I und II ist.

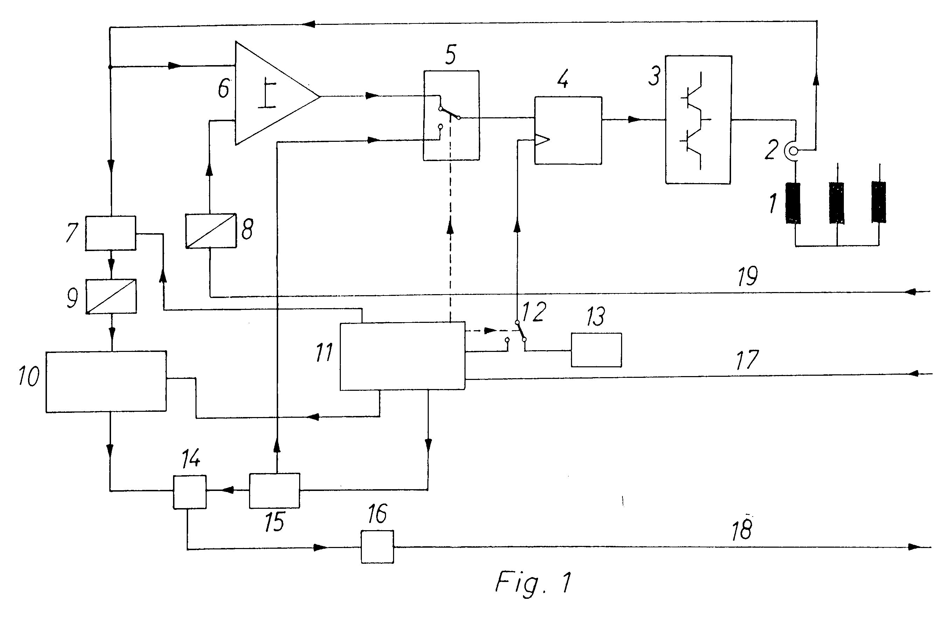

Fig. 1 zeigt eine Schaltungsvariante des erfindungsgemäßen Verfahrens mit fixen Meßzeiten in eine stromgeregelte, vorzugsweise permanentmagneterregte Synchronmaschine, wobei das Verfahren in eine konventionelle Regelung intergriert ist. Während der normalen Regelung vergleichen Komparatoren 6 ohne Hysterese die Sollwerte der Strangströme. Ein D-Flipflop 4 erlaubt eine Schaltzustandsänderung der Brückenzweige des Stromrichters 3 zu positiven (oder alternativ negativen) Flanken des Taktsignales.

Während des Meßbetriebes übernimmt das Modul 11 zur Meßablaufsteuerung die Kontrolle über das System. Der Komparator 6 wird mittels einer Umschalte-Logik 5 außer Betrieb gesetzt und direkt ein Spannungsraumzeiger gemäß der Meßvorschrift mittels der Brückenzweige des Stromrichters 3 an die Synchronmaschine gelegt. Über Sample-Hold-Glieder 7 und Analog-Digital-Wandler 9 werden die Stromänderungen erfaßt und daraus die Raumzeigergröße ermittelt. Durch Division dieser Größe durch den angelegten Spannungsraumzeiger in einem Dividierer 14 wird die komplexe Induktivität L_{diff} berechnet und von einem Drehwinkelrechner 16 mit den bekannten Methoden der komplexen Rechnung der Drehwinkel gebildet und der Regelung zugeführt. Nachdem alle erforderlichen Spannungsraumzeiger angelegt und alle dazugehörigen Stromwerte erfaßt wurden, übergibt das Modul 11 zur Meßablaufsteuerung durch Zurückschalten der Umschaltelogik 5 die Kontrolle wieder an die normale Regelung.

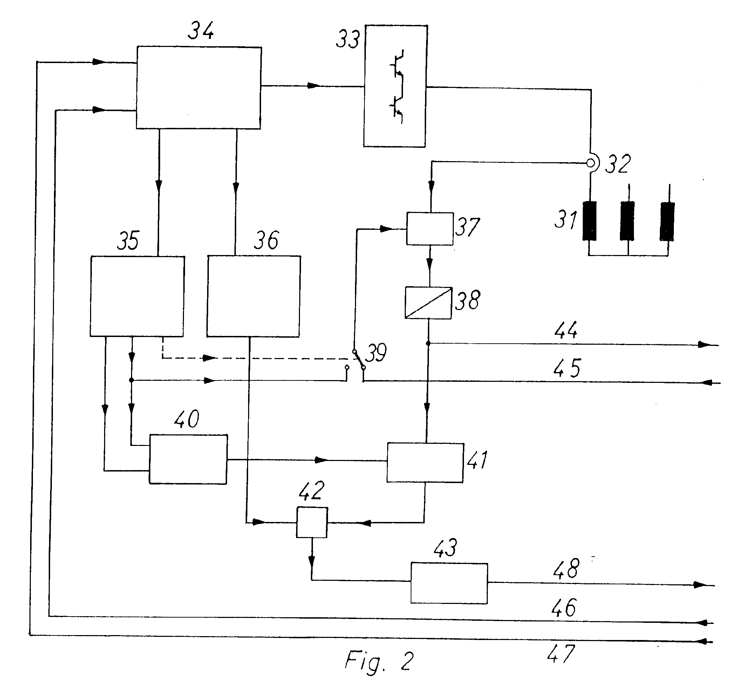

In Fig. 2 ist die Integration des erfindungsgemäßen Verfahrens in eine Spannungssteuerung mit fixem Puls muster dargestellt. Im normalen Regelbetrieb berechnet ein Regler die notwendige Spannungsamplitude und Frequenz, die von einem Pulsmustergenerator 34 gebildet werden; in diesen sind Meßzyklen integriert. Das Auftreten eines Meßzyklusses wird einem Modul 35 zur Meßzykluserkennung und -steuerung mitgeteilt. Dieses Modul 35 veranlaßt eine Messung der Stromänderung und des dazugehörigen Zeitintervalles. Gleichzeitig wird der Spannungsraumzeiger vom Pulsmustergenerator mitgeteilt. Damit wird wieder, wie in der Beschreibung zu Fig. 1 erläutert, die differentielle Induktivität und daraus der Drehwinkel berechnet. Nach dem Meßzyklus wird die Abtastung der Stromistwerte wieder von der Regelung gesteuert.

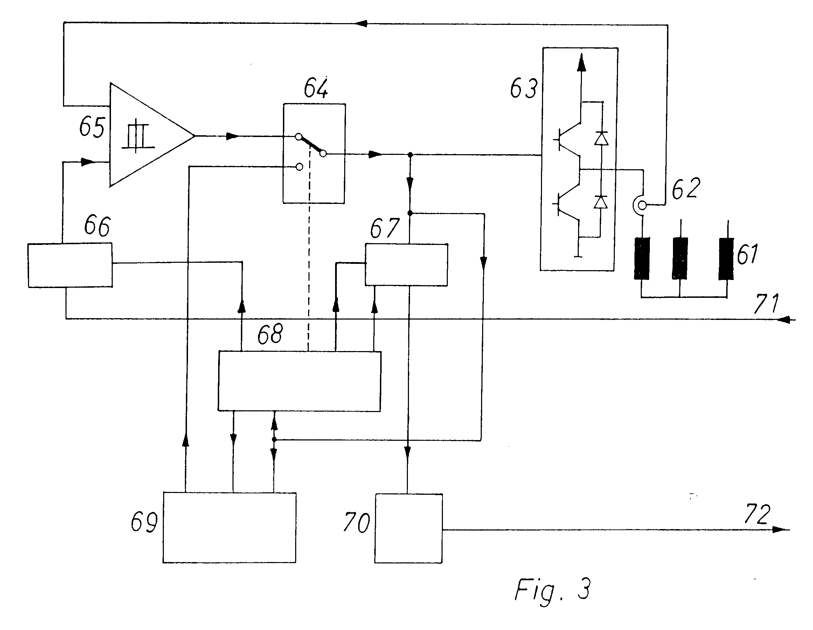

Die Anwendung der Erfindung bei einem Antrieb mit Toleranzband - Stromreglern ist in Fig. 3 aufgezeigt. Im normalen Regelbetrieb werden die Strangstrom-Sollwerte an hysteresebehaftete Komparatoren 65 herangeführt. Durch Vergleich mit den Stromistwerten werden die Brückenzweige der Stromrichter 63 bei Verlassen der Hysterese entsprechend umgeschaltet.

Während des Meßbetriebes übernimmt die Meßablaufsteuerung (68) die Kontrolle über das System. Der Stromsollwert des zu messenden Stranges 61 der Statorwicklung wird durch ein Sample-Hold-Glied 66 festgehalten; in den jeweils übrigen Strängen der Statorwicklung wird der Schaltzustand der Brückenzweige des Stromrichters 63 durch Umschalten einer Umschalte-Logik 64 von der direkten Brückenzweigsteuerung eingefroren. Nun wird mit Hilfe des Timers 67 jene Zeit ermittelt, die der Strom benötigt, um in dem zu messenden Strang 61 der Statorwicklung das Toleranzband zu durchqueren. Damit ist die Stromänderungsgeschwindigkeit festgelegt. Dieser Meßvorgang wird mit verschiedenen Strängen der Statorwicklung wiederholt. Der Drehwinkel kann nun wiederum, wie in der Beschreibung zu Fig. 1 erläutert, berechnet werden. Die Meßablaufsteuerung (68) übergibt danach die Kontrolle der Strangströme wieder an die Regelung.

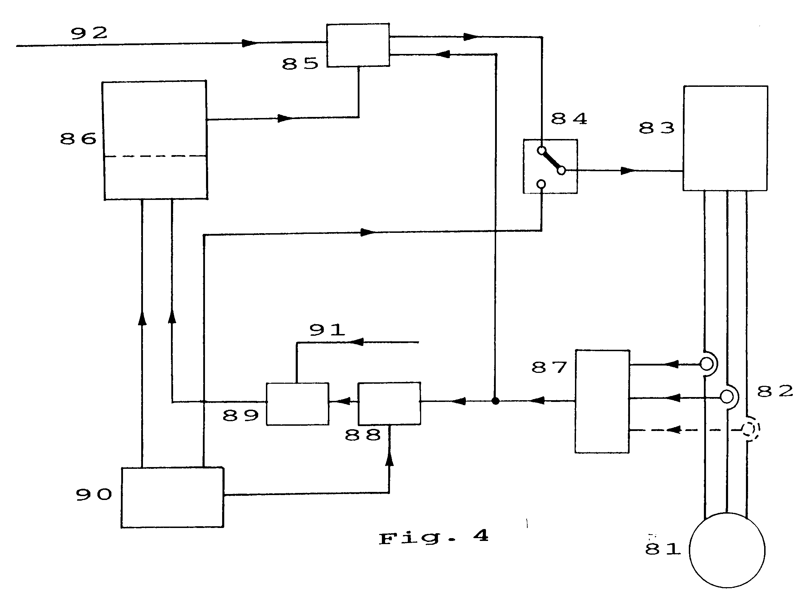

Wie Fig. 4 zeigt, wird eine Synchronmaschine 81 über drei Strommeßmodule 82 von einem Spannungszwischenkreis-Umrichter 83 gespeist. Die Istströme von den Strommeßmodulen 82 werden über eine Stromerfassungseinheit 87 an eine - in ihrem Timing von einer übergeordneten Lageerfassungssteuerung 90 gesteuerten - Lageerfassungseinheit 88 weitergeleitet. In dieser wird dann eine vorläufige Rotorposition entsprechend den erfindungsgemäßen Algorithmen berechnet und einem Korrekturglied 89 mitgeteilt. Diese Rotorposition wird unter Einbeziehung von momentanen Schätzwerten von Lage, Drehzahl, Drehmoment, Flußbetrag und Zwischenkreisspannung, welche dem Korrekturglied 89 über eine Leitung 91 mitgeteilt werden, korrigiert. Die ermittelte, korrigierte Rotorlageninformation wird einem Spannungsmodell 86 für Synchronmaschinen zugeführt und fallweise als Adaption der vom Spannungsmodell 86 ermittelten Lage eingesetzt. Dieser Adaptionsschritt wird zeitmäßig ebenfalls von der übergeordneten Lageerfassungssteuerung 90 koordiniert.

Die auf diese Weise ermittelte verbesserte Rotorlage wird in einer feldorientierten Regelung 85 eingesetzt, um aus einem von einem überlagerten Regelalgorithmus geforderten Sollmoment, welches der feldorientierten Regelung 85 über eine Leitung 92 mitgeteilt wird, Wechselrichter-Brückenansteuersignale zu erzeugen. Während einer Lageberechnung mit Meßsignalen werden die Wechselrichter-Brückenansteuersignale von der Lageerfassungssteuerung 90 generiert. Der Ausgang der feldorientierten Regelung 85 ist mit einem ersten Eingang einer Umschaltelogik 84 verbunden; ein zweiter Eingang der Umschaltelogik 85 ist mit der Lageerfassungssteuerung 90 verbunden. Über einen Ausgang der Umschaltelogik 84 werden die Brückenansteuersignale dem Spannungszwischenkreis-Umrichter 83 zugeführt. Da die Summe der der Synchronmaschine zugeführten Ströme Null sein muß, kann aufgrund der Knotenregel eines der drei Strommeßmodule 82 eingespart werden.

## Patentansprüche

1. Verfahren zur sensorlosen Drehwinkelerfassung einer dämpferlosen, vorzugsweise permanentmagneterregten, über einen Stromrichter (3, 33, 63, 83) gespeisten Synchronmaschine (1, 31, 61, 81) durch Meßsignale, **dadurch gekennzeichnet**, daß die Meßsignale vom Stromrichter (3, 33, 63) generierte Spannungssprünge sind, die einem Rechner zugeführt werden, der aus der Winkelabhängigkeit des Quotienten aus Statorspannungsraumzeiger und zeitlicher Änderung des Stromraumzeigers, im folgenden als komplexe differentielle Induktivität bezeichnet, die Polradlage berechnet, wobei die komplexe differentielle Induktivität sowohl in ihrem Betrag als auch in ihrem Argument mit dem doppelten Wert des gesuchten Drehwinkels, und zwar näherungsweise sinusförmig, schwankt, und daß dieser Verfahrensschritt mit geänderter Spannungsraumzeigerrichtung, in der vorzugsweise strangzahlgleichen Anzahl, wiederholt wird und für jede Meßrichtung die örtliche komplexe differentielle Induktivität ermittelt wird und daraus unter der idealisierten Annahme einer sinusförmigen Schwankung von Betrag und Phase der komplexen differentiellen Induktivität, wobei deren Betrag seine Extremwerte in der Magnetisierungsachse und elektrisch 90 Grad darauf und deren Argument an diesen Stellen ihre Nulldurchgänge und bei Winkeln von elektrisch 45 ° + k.90 ° ihre Extrema aufweist, unter Verwendung der bekannten Methoden der komplexen Rechnung der doppelte Wert des gesuchten Drehwinkels, welcher mit der Magnetachse übereinstimmt, ermittelt wird, und in die so festgestellte Magnetachse ein einziges Mal zum Start der Maschine einen Stromraumzeiger zum Zweck der Änderung der Magnetisierung einprägt und sofort - wie oben geschildert - die komplexe differentielle Induktivität bestimmt und ihren Betrag berechnet, sodann einen Stromraumzeiger in die Gegenrichtung zum zuvor eingeprägten Stromraumzeiger einprägt und wiederum den Betrag berechnet, und dann aus der Tatsache, daß die Magnetisierungsrichtung mit dem Minimum der zwei zuvor berechneten Beträge übereinstimmt, die mit dem gesuchten Drehwinkel übereinstimmende Magnetisierungsrichtung festliegt.

2. Verfahren nach Anspruch 1, **dadurch gekennzeichnet**, daß zwei hintereinanderfolgende Messungen durchgeführt werden, wobei der Spannungsraumzeiger der zweiten Messung entweder entgegengesetzt dem Spannungsraumzeiger der ersten Messung oder der Nullspannungsraumzeiger ist, und daß die Differenz der in diesen Messungen verwendeten Spannungsraumzeiger einerseits und die Differenz der aus diesen Messungen ermittelten zeitlichen Änderungen der Stromraumzeiger anderseits gebildet werden und diese Raumzeigergrößen an die Stelle der entsprechenden Raumzeigergrößen bei Einzelmessungen treten.

3. Verfahren nach Anspruch 1, **dadurch gekennzeichnet**, daß die EMK bei drehender Synchronmaschine aus momentanen Schätzwerten von Drehwinkel und Drehzahl berechnet und deren Einfluß auf das Meßergebnis kompensiert wird.

4. Verfahren nach mindestens einem der Ansprüche 1 bis 3, **dadurch gekennzeichnet**, daß die bei der Bildung der komplexen Kennwerte auftretenden spannungs, strom-, drehzahl- und flußbetragsabhängigen Abweichungen von den theoretisch erwarteten Werten in Real- bzw. Imaginärteil durch Korrekturwerte berücksichtigt bzw. eliminiert werden, wobei die Korrekturwerte tabellarisch abgespeichert oder durch einfache Korrekturfunktionen ermittelt werden, oder, bei Überschreitung einer gewissen minimalen Winkelgeschwindigkeit, durch Mittelwertbildung aus den Real- bzw. Imaginärteilen über Verzögerungsglieder bestimmt werden.
(Fig. 4)

5. Verfahren nach Anspruch 4, **dadurch gekennzeichnet**, daß die Rotorgeschwindigkeit durch zwei korrespondierende, mit komplementärer Umrichterschalterstellung durchgeführte Teilmessungen addiert wird, wodurch die Rotorgeschwindigkeit unter Elimination der Umrichterspannung ermittelt wird, indem der Stromänderungssummen-Raumzeiger das Produkt aus Statorflußverkettungs-Raumzeiger und Drehfeldgeschwindigkeit festlegt, und damit die Rotorgeschwindigkeit aus dem Betrag, und die Rotorposition aus dem Winkel dieses komplexen Zeigers folgt.
(Fig. 4)

6. Verfahren nach Anspruch 4 oder 5, **dadurch gekennzeich****net**, daß die gewonnene Flußinformation mit einem Spannungsmodell (86) für Synchronmaschinen, welches den Fluß aus der Ständergleichung berechnet, kombiniert wird und in Drehzahlbereichen, in denen das Spannungsmodell (86) durch störende Driften und Parameterunsicherheiten unbrauchbar wird, fallweise Messungen nach obigen Ansprüchen eingebaut werden, welche dann korrigierend in die vom Spannungsmodell (86) ermittelten Rotorpositionsschätzwerte eingreifen.
(Fig. 4)

7. Schaltungsanordnung zur Durchführung des Verfahrens zur sensorlosen Drehwinkelerfassung einer dämpferlosen, vorzugsweise permanentmagneterregten, über einen Stromrichter (3, 33, 63, 83) gespeisten Synchronmaschine (1, 31, 61, 81) durch Meßsignale nach einem der Ansprüche 1 bis 6, dadurch **gekennzeichnet,** daß der Stromistwert jeweils eines Stranges (1) der Statorwicklung der Synchronmaschine von einer Strommeßeinrichtung (2) abgenommen und einem ersten Eingang eines Komparators (6) ohne Hysterese und einem ersten Eingang eines Sample and Hold-Gliedes (7) zugeführt ist, und daß der Ausgang des Sample and Hold-Gliedes (7) über einen Analog-Digitalwandler (9) mit einem ersten Eingang eines Stromanstiegsgeschwindigkeitsrechners (10) verbunden ist, und daß der Ausgang des Komparators (6) ohne Hysterese mit einem ersten Eingang einer Umschaltelogik (5) verbunden ist, und daß die Meßanforderung der Regelung über eine erste Leitung (17) dem Eingang eines Moduls (11) zur Meßablaufsteuerung zugeleitet ist, und daß ein erster Ausgang des Moduls (11) zur Meßablaufsteuerung mit einem ersten Umschaltekontakt eines Umschalters (12) verbunden ist, und daß ein zweiter Umschaltekontakt des Umschalters (12) mit dem Ausgang eines Taktgenerators (13) verbunden ist, und daß der Wurzelkontakt des Umschalters (12) mit dem dynamischen Eingang eines D-Flipflops (4) verbunden ist, und daß der statische Eingang des D-Flipflops (4) mit dem Ausgang der Umschaltelogik (5) verbunden ist, und daß digitale Schaltbefehle über den Ausgang des D-Flipflops (4) einem Brückenzweig des Stromrichters (3) zugeleitet sind, und daß ein zweiter Ausgang des Moduls (11) für die Meßablaufsteuerung mit einem zweiten Eingang des Sample and Hold-Gliedes (7) verbunden ist, und daß ein dritter Ausgang des Moduls (11) für die Meßablaufsteuerung mit einem zweiten Eingang des Stromanstiegsgeschwindigkeitsrechners (10) verbunden ist, und daß der Ausgang des Stromanstiegsgeschwindigkeitsrechners (10) mit einem ersten Eingang eines Dividierers (14) verbunden ist, und daß der Ausgang des Dividierers (14) mit dem Eingang eines Drehwinkelrechners (16) verbunden ist, und daß der vom Drehwinkelrechner (16) gebildete Drehwinkel über eine zweite Leitung (18) der Regelung zuführbar ist, und daß ein vierter Ausgang des Moduls (11) zur Meßablaufsteuerung mit dem Eingang eines Moduls (15) zur Spannungsraumzeigervorgabe verbunden ist, und daß ein erster Ausgang des Moduls (15) zur Spannungsraumzeigervorgabe mit einem zweiten Eingang des Dividierers (14) verbunden ist, und daß ein zweiter Ausgang des Moduls (15) zur Spannungsraumzeigervorgabe mit einem zweiten Eingang der Umschaltelogik (5) verbunden ist, und daß der Sollwert der Regelung über eine dritte Leitung (19) dem Eingang eines Digital-Analog-Wandlers (8) zugeführt ist, und daß der Ausgang des Digital-Analog-Wandlers (8) mit einem zweiten Eingang des Komparators (6) ohne Hysterese verbunden ist.
(Fig. 1)

8. Schaltungsanordnung nach Anspruch 7, **dadurch gekenn****zeichnet**, daß die zufolge der Spannungssprünge und zur Berechnung der zeitlichen Änderung des Stromraumzeigerbetrages notwendigen Stromänderungen von an den zwischen Stromrichter (3, 33, 63) und Synchronmaschine angeordneten Strommeßeinrichtungen (2, 32, 62) abgenommen werden.

9. Schaltungsanordnung nach Anspruch 8, **dadurch** **gekennzeichnet**, daß der Stromistwert jeweils eines Stranges (31) der Statorwicklung der Synchronmaschine von einer Strommeßeinrichtung (32) abgenommen und einem ersten Eingang eines Sample and Hold-Gliedes (37) zugeführt ist, und daß der Stromistwert vom Ausgang des Sample and Hold-Gliedes (37) über einen Analog-Digital-Wandler (38) einem ersten Eingang eines Stromanstiegsgeschwindigkeitsrechners (41) sowie über eine erste Leitung (44) der Regelung zugeführt ist, und daß der Abtastbefehl von der Regelung über eine zweite Leitung (45) sowie über einen ersten Umschaltekontakt und über einen Wurzelanschluß eines Umschalters (39) einem zweiten Eingang des Sample and Hold-Gliedes (37) zuführbar ist, und daß die Spannungsvorgabe bzw. die Frequenzvorgabe von der Regelung über eine dritte Leitung (46) bzw. über eine vierte Leitung (47) einem ersten bzw. einem zweiten Eingang eines Pulsmustergenerators (34) mit integrierten Meßzyklen zugeführt ist, und daß digitale Schaltbefehle über einen ersten Ausgang des Pulsmustergenerators (34) einem Brückenzweig des Stromrichters (33) zuführbar sind, und daß ein zweiter Ausgang des Pulsmustergenerators (34) mit dem Eingang eines Moduls (35) zur Meßzykluserkennung und -steuerung verbunden ist, und daß ein dritter Ausgang des Pulsmustergenerators (34) mit dem Eingang eines Spannungsraumzeigerbildners (36) verbunden ist, und daß ein erster Ausgang des Moduls (35) zur Meßzykluserkennung und -steuerung mit einem ersten Eingang eines Timers (40) verbunden ist, und daß die Abtastbefehle von der Meßablaufsteuerung von einem zweiten Ausgang des Moduls (35) zur Meßzykluserkennung und -steuerung einem zweiten Eingang des Timers (40) sowie einem zweiten Umschaltekontakt des Umschalters (39) zuführbar sind, und daß der Ausgang des Timers (40) mit einem zweiten Eingang des Stromanstiegsgeschwindigkeitsrechners (41) verbunden ist, und daß der Ausgang des Spannungsraumzeigerbildners (36) mit einem ersten Eingang eines Dividierers (42) verbunden ist, und daß der Ausgang des Stromanstiegsgeschwindigkeitsrechners (41) mit einem zweiten Eingang des Dividierers (42) verbunden ist, und daß der Ausgang des Dividierers (42) mit dem Eingang eines Drehwinkelrechners (43) verbunden ist, und daß der gebildete Drehwinkel vom Ausgang des Drehwinkelrechners (43) über eine fünfte Leitung (48) der Regelung zuführbar ist.
(Fig. 2)

10. Schaltungsanordnung nach Anspruch 8, **dadurch gekennzeichnet**, daß der Stromistwert jeweils eines Stranges (61) der Statorwicklung der Synchronmaschine von einer Eingang eines hysteresebehaften Komparators (65) zugeführt ist, und daß der Ausgang des hysteresebehafteten Komparators (65) mit einem ersten Eingang einer Umschaltelogik (64) verbunden ist, und daß digitale Schaltbefehle über den Ausgang der Umschaltelogik (64) einem Brückenzweig des Stromrichters (63) zuführbar sind, und daß der Steuereingang der Umschaltlogik (64) mit einem Ausgang eines Meßablaufsteuerungsmoduls (68) und der Ausgang der Umschaltelogik (64) mit dem Eingang eines Meßablaufsteuerungsmoduls (68) sowie mit jeweils einem ersten Eingang eines Timers (67) und eines zur direkten Brückenzweigsteuerung während der Messung vorgesehenen Moduls (69) verbunden ist, und daß ein erster bzw. ein zweiter Ausgang des Meßablaufsteuerungsmoduls (68) mit einem zweiten bzw. einem dritten Eingang des Timers (67) verbunden sind, und daß ein dritter Ausgang des Meßablaufsteuerungsmoduls (68) mit einem ersten Eingang eines Sample and Hold-Gliedes (66) verbunden ist, und daß ein vierter Ausgang des Meßablaufsteuerungsmoduls (68) mit einem zweiten Eingang des zur direkten Brückenzweigsteuerung während der Messung vorgesehenen Moduls (69) verbunden ist, und daß der Ausgang des zur direkten Brückenzweigsteuerung während der Messung vorgesehenen Moduls (69) mit einem zweiten Eingang der Umschaltelogik (64) verbunden ist, und daß der Stromsollwert von der Regelung über eine erste Leitung (71) einem zweiten Eingang des Sample and Hold-Gliedes (66) zugeleitet ist, und daß der Ausgang des Sample and Hold-Gliedes (66) mit einem zweiten Eingang des hysteresebehafteten Komparators (65) verbunden ist, und daß der Ausgang des Timers (67) mit dem Eingang eines Drehwinkelrechners (70) verbunden ist, und daß der gebildete Drehwinkel über den Ausgang des Drehwinkelrechners (70) über eine zweite Leitung (72) der Regelung zuführbar ist.
(Fig. 3)

## Claims

1. Method for the sensor-free determination, by means of test signals, of the angle of rotation of a damper-free, preferably permanent-magnet-excited synchronous machine (1, 31, 61, 81) supplied via a converter (3, 33, 63, 83), characterized in that the test signals are sudden voltage changes which are generated by the converter (3, 33, 63) and are fed to a computer which calculates the rotor position from the angular dependence of the ratio of stator-voltage space vector and change with time of the current space vector, denoted below as complex differential inductance, the complex differential inductance varying both in its modulus and in its argument at twice the value of the required angle of rotation, and in particular approximately sinusoidally, and in that this step in the method is repeated with altered voltage space-vector direction, in a number preferably equal to the number of phases and, for each measurement direction, the local complex differential inductance is determined and, with the idealized assumption of a sinusoidal variation of modulus and phase of the complex differential inductance, its modulus having its extreme values in the magnetization axis and 90 degrees electrical thereto and its argument having its passages through zero at these points and its extremes at angles of 45° + k.90° electrical, twice the value of the required angle of rotation, which coincides with the magnetic axis, is determined therefrom using the known methods of the complex calculation, and impresses a current space vector once in the magnetic axis determined in this way when the machine is started for the purpose of altering the magnetization and immediately determines, as described above, the complex differential inductance and calculates its value, then impresses a current space vector in the opposite direction to the current space vector previously impressed and calculates the modulus again and then the direction of magnetization coinciding with the required angle of rotation is fixed as a result of the fact that the magnetization direction coincides with the minimum of the two moduli previously calculated.

2. Method according to Claim 1, characterized in that two consecutive measurements are carried out, the voltage space vector of the second measurement either being opposite to the voltage space vector of the first measurement or the zero-voltage space vector, and in that the difference between the voltage space vectors used in these measurements, on the one hand, and the difference between the changes in the current space vector with time determined from said measurements, on the other hand, are formed and these space-vector variables replace the corresponding space-vector variables in the case of individual measurements.

3. Method according to Claim 1, characterized in that the EMF is calculated from instantaneous estimated values of angle of rotation and speed for a rotating synchronous machine and its effect on the test result is compensated for.

4. Method according to at least one of Claims 1 to 3, characterized in that the voltage-, current-, speed- and flux-modulus dependent deviations from the theoretically expected values in the real or imaginary part, which deviations occur in the formation of the complex characteristic values, are allowed for or eliminated by means of correction values, the correction values being stored in tabular form or being determined by simple correction functions, or, if a certain minimum angular speed is exceeded, being determined by averaging from the real or imaginary parts by means of delay elements.
(Fig. 4)

5. Method according to Claim 4, characterized in that the rotor speed is summed by means of two corresponding component measurements made with complementary converter switch position, as a result of which the rotor speed is determined with the elimination of the converter voltage, the space vector for the sums of the current-changes determining the product of stator-flux linkage space vector and rotating-field speed and, consequently, the rotor speed follows from the modulus and the rotor position from the angle of said complex vector.
(Fig. 4)

6. Method according to Claim 4 or 5, characterized in that the flux information obtained is combined with a voltage model (86) for synchronous machines which calculates the flux from the stator equation and in speed ranges in which the voltage model (86) becomes unusable as a result of interfering drifts and parameter uncertainties, measurements according to the above claims are in each individual case incorporated which then enter as a correction into the estimated values of rotor position determined by the voltage model (86).
(Fig. 4)

7. Circuit arrangement for carrying out the method for the sensor-free determination, by means of test signals, of the angle of rotation of a damper-free, preferably permanent-magnet-excited synchronous machine (1, 31, 61, 81) supplied via a converter (3, 33, 63, 83) according to one of Claims 1 to 6, characterized in that the actual current value of one phase (1) in each case is picked up from the stator winding of the synchronous machine by a current-measuring device (2) and supplied to a first input of a comparator (6) without hysteresis and to a first input of a sample-and-hold element (7), and in that the output of the sample-and-hold element (7) is connected via an analog/digital converter (9) to a first input to a rate-of-current-increase computer (10), and in that the output of the comparator (6) without hysteresis is connected to a first input of a switching logic (5), and in that the test requirement of the control signal is fed to the input of a test-sequence-control module (11) via a first conductor (17), and in that a first output of the test-sequence control module (11) is connected to a first switching contact of a switch (12), and in that a second switching contact of the switch (12) is connected to the output of a clock generator (13), and in that the root contact of the switch (12) is connected to the dynamic input of a D flip-flop (4), and in that the static input of the D flip-flop (4) is connected to the output of the switching logic (5), and in that digital switching commands are fed to a bridge arm of the converter (3) via the output of the D flip-flop, and in that a second output of the test-sequence control module (11) is connected to a second input of the sample-and-hold element (7), and in that a third output of the test-sequence control module (11) is connected to a second input of the rate-of-current-increase computer (10), and in that the output of the rate-of-current-increase computer (10) is connected to a first input of a divider (14), and in that the output of the divider (14) is connected to the input of the angle-of-rotation computer (16) and in that the angle of rotation generated by the angle-of-rotation computer (16) can be supplied to the control system via a second conductor (18), and in that a fourth output of the test-sequence control module (11) is connected to the input of a module (15) for setting the voltage space vector, and in that a first output of the module (15) for setting the voltage space vector is connected to a second input of the divider (14), and in that a second output of the module (15) for setting the voltage space vector is connected to a second input of the switching logic (5) and in that the desired value of the control system is supplied to the input of a digital/analog converter (8) via a third conductor (19), and in that the output of the digital/analog converter (8) is connected to a second input of the comparator (6) without hysteresis.
(Fig. 1)

8. Circuit arrangement according to Claim 7, characterized in that the current changes necessary as a consequence of the sudden voltage changes and for calculating the change in the current space vector modulus with time are tapped off by current-measuring devices (2, 32, 62) disposed between converter (3, 33, 63) and synchronous machine.

9. Circuit arrangement according to Claim 8, characterized in that the actual current value of one phase (31) of the stator winding of the synchronous machine is tapped off in each case by a current-measuring device (32) and supplied to a first input of a sample-and-hold element (37), and in that the actual current value is supplied from the output of the sample-and-hold element (37) to a first input of a rate-of-current increase computer (41) via an analog/digital converter (38) and also via a first conductor (44) of the control system, and in that the sampling command of the control system can be supplied to a second input of the sample-and-hold element (37) via a second conductor (45) and also via a first switching contact and via a root connection of a switch (39), and in that the voltage setting or the frequency setting of the control signal is supplied to a first or second input of a pulse-pattern generator (34) having test cycles incorporated via a third conductor (46) or a fourth conductor (47) respectively, and in that digital switching commands can be supplied to a bridge arm of the converter (33) via a first output of the pulse-pattern generator (34), and in that a second output of the pulse-pattern generator (34) is connected to the input of a test-cycle detection and control module (35), and in that a third output of the pulse-pattern generator (34) is connected to the input of a voltage space-vector generator (36), and in that a first output of the test-cycle detection and control module (35) is connected to a first input of a timer (40), and in that the sampling commands of the test-sequence control system can be supplied by a second output of the test-cycle detection and control module (35) to a second input of the timer (40) and also to a second switch contact of the switch (39), and in that the output of the timer (40) is connected to a second input of the rate-of-current-increase computer (41), and in that the output of the voltage space-vector generator (36) is connected to a first input of a divider (42), and in that the output of the rate-of-current-increase computer (41) is connected to a second input of the divider (42), and in that the output of the divider (42) is connected to the input of an angle-of-rotation computer (43) and in that the angle of rotation generated can be supplied by the output of the angle-of-rotation computer (43) to the control system via a fifth conductor (48).
(Fig. 2)

10. Circuit arrangement according to Claim 8, characterized in that the actual current value of one phase (61) of the stator winding of the synchronous machine in each case is tapped off by an input of a comparator (65) which is subject to hysteresis, and in that the output of the comparator (65) which is subject to hysteresis is connected to a first input of a switching logic (64), and in that digital switching commands can be supplied to one bridge arm of the converter (63) via the output of the switching logic (64), and in that the control input of the switching logic (64) is connected to an output of a test sequence control module (68) and the output of the switching logic (64) is connected to the input of a test-sequence control module (68) and to a first input, in each case, of a timer (67) and of a module (69) provided for the direct bridge-arm control during the measurement, and in that a first and a second output of the test-sequence control module (68) are connected to a second and a third input of the timer (67), respectively, and in that a third output of the test-sequence control module (68) is connected to a first input of a sample-and-hold element (66), and in that a fourth output of the test-sequence control module (68) is connected to a second input of the module (69) provided for the direct bridge-arm control during the measurement, and in that the output of the module (69) provided for the direct bridge-arm control during the measurement is connected to a second input of the switching logic (64), and in that the desired current value is fed by the control system via a first conductor (71) to a second input of the sample-and-hold element (66), and in that the output of the sample-and-hold element (66) is connected to a second input of the comparator (65) which is subject to hysteresis, and in that the output of the timer (67) is connected to the input of an angle-of-rotation computer (70), and in that the angle of rotation generated can be supplied to the control system by means of the output of the angle-of-rotation computer (70) via a second conductor (72).
(Fig. 3)

## Revendications

1. Procédé pour la détection sans capteurs de la position angulaire d'une machine synchrone (1, 31, 61, 81) sans amortisseur, de référence excitée par un aimant permanent, alimentée par un convertisseur (3, 33, 63, 83), grâce à des signaux de mesure, caractérisé en ce que les signaux de mesure sont des sauts de tension générés par le convertisseur (3, 33, 63), qui sont amenés à un calculateur qui calcule la position de la roue polaire à partir de la dépendance angulaire des quotients produits par l'indicateur spatial de tension du stator et la modification dans le temps de l'indicateur spatial d'intensité, appelée ci-après inductivité différentielle complexe, l'inductivité différentielle complexe variant aussi bien en grandeur qu'en argument avec la double valeur de la position angulaire recherchée de manière approximativement sinusoïdale, et en ce que cette étape de procédé est répétée avec une direction de l'indicateur spatial de tension modifiée, dans un nombre de préférence égal au nombre de branches, et l'inductivité différentielle complexe locale est déterminée pour chaque direction de mesure et l'on détermine à partir de là en utilisant les procédés connus de calcul complexe la double valeur de la position angulaire recherchée, qui coïncide avec l'axe magnétique, avec la supposition idéalisée que la grandeur et la phase de l'inductivité différentielle complexe fluctuent de manière sinusoïdale, leur grandeur présentant ses valeurs extrêmes sur l'axe de magnétisation et à 90° de celui-ci du point de vue électrique et leur argument présentant ses extrêmes en ces points de ses passages à zéro et à des angles de 45° + k. 90° du point de vue électrique, et qui marque un seule fois un indicateur spatial d'intensité dans l'axe ainsi déterminé au démarrage de la machine afin de modifier la magnétisation, et détermine tout de suite - comme cela est décrit ci-dessus - l'inductivité différentielle complexe et en calcule la grandeur, marque ensuite un indicateur spatial d'intensité en sens inverse de l'indicateur spatial d'intensité précédemment marqué et calcule à nouveau la grandeur, et détermine ensuite la direction de magnétisation coïncidant avec la position angulaire recherchée à partir du fait que le sens de magnétisation coïncide avec le minimum des deux montants précédemment calculés.

2. Procédé selon la revendication 1, caractérisé en ce que deux mesures successives sont réalisées, l'indicateur spatial de tension de la deuxième mesure étant opposé à l'indicateur spatial de tension de la première mesure ou constituant l'indicateur spatial de tension à zéro, et en ce que la différence des indicateurs spatiaux de mesure utilisés dans ces mesures, d'une part, et la différence des modifications dans le temps des indicateurs spatiaux d'intensité déterminées à partir de ces mesures, d'autre part, sont formées et ces grandeurs d'indicateurs spatiaux remplacent les grandeurs d'indicateurs spatiaux correspondantes de mesures isolées.

3. Procédé selon la revendication 1, caractérisé en ce que la force électro-motrice est calculée sur la machine synchrone en rotation à partir de valeurs estimées instantanées de la position angulaire et du nombre de tour et que son influence sur le résultat de mesure est compensée.

4. Procédé selon l'une ou l'ensemble des revendications 1 à 3, caractérisé en ce que les écarts par rapport aux valeurs attendues dans la partie réelle ou imaginaire et dépendant de la tension, de l'intensité, du nombre de tours et de la grandeur du flux qui apparaissent dans la formation de valeurs caractéristiques complexes sont pris en compte ou éliminés par des valeurs de correction, celles-ci étant enregistrées sous forme de tableaux ou déterminées par des fonctions de correction simples, ou, si une certaine vitesse angulaire minimale est dépassée, déterminés par la formation d'une moyenne à partir des pièces réelles ou imaginaires par des éléments retardateurs.
(Figure 4)

5. Procédé selon la revendication 4, caractérisé en ce que la vitesse du rotor est additionnée par deux mesures partielles correspondantes réalisées dans des positions complémentaires du circuit convertisseur, la vitesse du rotor étant déterminée en éliminant la tension du convertisseur, par le fait que l'indicateur spatial de la somme des modifications d'intensité détermine le produit des indicateurs spatiaux d'enchaînement de flux du stator et de la vitesse du champ rotatif, et ainsi la vitesse de rotation du rotor à partir de ce montant, et la position du rotor s'ensuivant à partir de l'angle de cet indicateur complexe.
(Figure 4)

6. Procédé selon la revendication 4 ou 5, caractérisé en ce que l'information de flux obtenue est combinée avec un modèle de tensions (86) pour des machines synchrones, qui calcule le flux à partir de l'équation statorique, et des mesures selon les revendications précédentes sont éventuellement intégrées dans les régimes où le modèle de tensions (86) est rendu inutilisable par des dérives perturbatrices et des incertitudes des paramètres, et agissent alors sur les valeurs estimées de la position du rotor déterminées par le modèle de tensions (86) afin de les corriger.
(Figure 4)

7. Disposition de circuit pour la mise en oeuvre du procédé pour la détection sans capteurs de la position angulaire d'une machine synchrone (1, 31, 61, 81) sans amortisseur, de référence excitée par un aimant permanent, alimentée par un convertisseur (3, 33, 63, 83), grâce à des signaux de mesure selon les revendications 1 à 6, caractérisée en ce que la valeur de consigne de l'intensité dans une branche (1) à la fois de l'enroulement du stator de la machine synchrone est prélevée par un dispositif de mesure de l'intensité (2) et transmise à une première entrée d'un comparateur (6) sans hystérésis et à une première entrée d'un élément d'interrogation et de mémoire (7), en ce que la sortie de l'élément d'interrogation et de mémoire (7) est reliée par un convertisseur analogique-numérique (9) avec une première entrée d'un calculateur de la vitesse d'augmentation de l'intensité (10), en ce que la sortie du comparateur (6) sans hystérésis est reliée à une première entrée d'une logique de commutation (5), en ce que la commande de mesure de la régulation est transmise par une première ligne (17) à l'entrée d'un module (11) de contrôle du processus de mesure, en ce qu'une première entrée du module (11) de contrôle du processus de mesure est reliée à un premier contact de commutation d'un commutateur (12), en ce qu'un second contact de commutation du commutateur (12) est relié à la sortie d'un générateur de cadence (13), en ce que le contact de racine du commutateur (12) est relié avec l'entrée dynamique d'une bascule D (4), en ce que l'entrée statique de la bascule D (4) est reliée à l'entrée de la logique de commutation (5), en ce que des ordres de commutation numériques sont envoyés en passant par la sortie de la bascule D (4) à une branche de pont du convertisseur (3), en ce qu'une seconde sortie du module (11) de contrôle du processus de mesure est reliée à une seconde entrée de l'élément d'interrogation et de mémoire (7), en ce qu'une troisième sortie du module (11) de contrôle du processus de mesure est reliée à une seconde entrée du calculateur de la vitesse d'augmentation de l'intensité (10), en ce que la sortie du calculateur de la vitesse d'augmentation de l'intensité (10) est reliée à une première entrée d'un diviseur (14), en ce que la sortie du diviseur (14) est reliée à l'entrée d'un calculateur de position angulaire (16), en ce que la position angulaire établie par le calculateur de formation angulaire (16) peut être transmise par une seconde ligne (18) à la régulation, en ce qu'une quatrième sortie du module (11) de contrôle du processus de mesure est reliée avec une entrée d'un module (15) de détermination de l'indicateur spatial de tension, en ce qu'une première sortie du module (15) de détermination de l'indicateur spatial de tension est reliée à une seconde entrée du diviseur (14), en ce qu'une seconde sortie du module (15) de détermination de l'indicateur spatial de tension est reliée à une seconde entrée de la logique de commutation (5), en ce que la valeur de consigne de la régulation est transmise à l'entrée d'un convertisseur analogique-numérique (8) par une troisième ligne (19), et en ce que la sortie du convertisseur analogique-numérique (8) est reliée à une seconde entrée du comparateur (6) sans hystérésis.
(Figure 1)

8. Disposition de circuit selon la revendication 7, caractérisée en ce que les modifications de l'intensité suivant les sauts de tension et nécessaires pour le calcul de la modification dans le temps de la grandeur de l'indicateur spatial de tension sont tirées des dispositifs de mesure de l'intensité (2, 32, 62) disposés entre le convertisseur (3, 33, 63) et la machine synchrone.

9. Disposition de circuit selon la revendication 8, caractérisée en ce que la valeur réelle d'intensité d'une branche (31) à la fois de l'enroulement du stator de la machine synchrone est tirée d'un dispositif de mesure de l'intensité (32) et amenée à une première entrée d'un élément d'interrogation et de mémoire (37), en ce que la valeur réelle de l'intensité est amenée de la sortie de l'élément d'interrogation et de mémoire (37) à une première entrée d'un calculateur de la vitesse d'augmentation de l'intensité (41) en passant par un convertisseur analogique-numérique (38) ainsi qu'à la régulation par une première ligne (44), en ce que l'ordre de détection peut être amené de la régulation à une seconde sortie de l'élément d'interrogation et de mémoire (37) en passant par un premier contact de commutation et par un raccord de racine d'un commutateur (39), en ce que la définition de la tension ou la définition de la fréquence par la régulation est amenée par une troisième ligne (46) ou une quatrième ligne (47) d'une première ou d'une seconde sortie d'un générateur de schémas d'impulsions (34) avec des cycles de mesure intégrés, en ce que des commandes de commutation numériques peuvent être transmises par une première sortie du générateur de schémas d'impulsions (34) à une branche de pont du convertisseur (33), en ce qu'une seconde sortie du générateur de schémas d'impulsions (34) est reliée à l'entrée d'un module (35) de détection et de commande des cycles de mesure, en ce qu'une troisième sortie du générateur de schémas d'impulsions (34) est reliée à l'entrée d'un élément de formation de l'indicateur spatial de tension (36), en ce que la première sortie du module (35) de détection et de commande des cycles de mesure est reliée à une première entrée d'un chronomètre (40), en ce que les ordres de détection de la commande du processus de mesure peuvent être transmis d'une seconde sortie du module (35) de détection et de commande des cycles de mesure à une première entrée du chronomètre (40) ainsi qu'à un second contact de commutation du commutateur (39), en ce que la sortie du chronomètre (40) est reliée à une seconde entrée du calculateur de la vitesse d'augmentation de l'intensité (41), en ce que la sortie de l'élément de formation de l'indicateur spatial de tension (36) est reliée à une première entrée d'un diviseur (42), en ce que la sortie du calculateur de la vitesse d'augmentation de l'intensité (41) est reliée à une seconde entrée du diviseur (42), en ce que la sortie du diviseur (42) est reliée à l'entrée d'un calculateur de position angulaire (43), et en ce que la position angulaire établie peut être transmise de la sortie du calculateur de position angulaire (43) à la régulation par une cinquième ligne (48).
(Figure 2)

10. Disposition de circuit selon la revendication 8, caractérisée en ce que la valeur réelle de tension d'une branche (61) à la fois de l'enroulement de stator de la machine synchrone est transmise à partir de l'entrée d'un comparateur (65) affecté d'une hystérésis, en ce que la sortie du comparateur (65) affecté d'une hystérésis est reliée à une première entrée d'une logique de commutation (64), en ce que des signaux numériques de commutation peuvent être transmis par la sortie de la logique de commutation (64) à une branche de pont du convertisseur (63), en ce que l'entrée de commande de la logique de commutation (64) est reliée à une sortie d'un module de contrôle du processus de mesure (68) et la sortie de la logique de commutation (64) à l'entrée d'un module de contrôle du processus de mesure (68) ainsi, à chaque fois, qu'à une première entrée d'un chronomètre (67) et d'un module (69) prévu pour la commande directe de la branche de pont pendant la mesure, en ce qu'une première sortie du module de contrôle du processus de mesure (68) et une seconde sont reliées à une seconde entrée du chronomètre (67) et une troisième, en ce qu'une troisième sortie du module de contrôle du processus de mesure (68) est reliée à une première entrée d'un élément d'interrogation et de mémoire (66), en ce qu'une quatrième entrée du module de contrôle du processus de mesure (68) est reliée à une seconde entrée du module (69) prévu pour la commande directe de la branche de pont pendant la mesure, en ce que la sortie du module (69) prévu pour la commande directe de la branche de pont pendant la mesure est reliée à une seconde entrée de la logique de commutation (64), en ce que la valeur de consigne de l'intensité est transmise par la régulation à une seconde entrée de l'élément d'interrogation et de mémoire (66) par une première ligne (71), en ce que la sortie de l'élément d'interrogation et de mémoire (66) est reliée à une seconde entrée du comparateur (65) affecté d'une hystérésis, en ce que la sortie du chronomètre (67) est reliée à l'entrée d'un calculateur de position angulaire (70), et en ce que la position angulaire établie peut être transmise à la régulation par la sortie du calculateur de position angulaire (70) sur une seconde ligne (72).
(Figure 3)
